# EUROPEAN PATENT APPLICATION

(11) **EP 3 410 310 A1**
(43) Date of publication of application: **05.12.2018**
(21) Application number: 17743648.2
(22) Date of filing: 19.01.2017
(51) Int. Cl.: G06F 17/30

(54) **QUESTION RECOMMENDATION METHOD AND DEVICE**

(30) Priority: 29.01.2016 CN 201610065638
(71) Applicant: Alibaba Group Holding Limited, Grand Cayman (KY)
(72) Inventor: JIANG, Xiaoyan, Hangzhou Zhejiang 311121 (CN); DAI, Bin, Hangzhou Zhejiang 311121 (CN); YANG, Xu, Hangzhou Zhejiang 311121 (CN); CHU, Wei, Hangzhou Zhejiang 311121 (CN); ZHAO, Yao, Hangzhou Zhejiang 311121 (CN)
(74) Representative: Finnegan Europe LLP
(86) International application number: PCT/CN2017/071704
(87) International publication number: WO 2017/129033

(57) **Abstract**

The present invention discloses a question recommendation method and device. The method includes: acquiring questions and acquiring question features corresponding to the questions in a sample collection cycle; processing the question features, the processed question features being in a preset numerical range; and determining a to-be-recommended question according to the questions, a second probability of each question among the questions, and a specified recommendation threshold, wherein the questions and the second probability of each question among the questions are obtained by using the processed question features and first probabilities; and the first probabilities are obtained based on the question features. By using the method in the present application, a question to be recommended to a user is obtained by performing calculation on previous question features, thus improving the accuracy of question recommendation to the user.

## Description

### Technical Field

The present application relates to the field of communications technologies, and in particular, to a question recommendation method; the present application also relates to a question recommendation device.

### Background Art

With the rise of e-commerce festivals such as Double Eleven and Double Twelve, increasingly more people start to shop online. However, the "festival economy" also causes double impacts on e-commerce, i.e., pressure from sales explosions and pressure on customer service. The customer service of an enterprise is generally divided into manual customer service and self-help customer service. Higher pressure on the customer service impels the enterprise to use more staff in the manual customer service, and thus the costs rise accordingly.

Therefore, a self-help customer service system needs to have a more powerful processing capacity to meet the requirement of the customer service. The self-help customer service system can process and solve users' questions automatically. However, as the amount of data to be processed in the self-help customer service system increases, the existing method can no longer process all the data. The computing efficiency of existing algorithms declines as the quantity of questions increases. Moreover, most features are sparse, while the prior art is applicable to processing dense features. As such, the precision of user question prediction decreases as the quantity of question features in the system increases. In addition, only a single model is used in the prior art, which limits the effect. Therefore, with the incessant information explosions, current machine learning models can no longer meet the requirement.

Therefore, a technical problem to be solved urgently by those skilled in the art is how to carry out calculation based on previous question features to obtain questions to be recommended to users, to improve the accuracy of questions recommended to users, thus solving the users' questions at a self-help customer service node, reducing the number of users using the manual customer service, and lowering the costs of the manual customer service.

### Summary of the Invention

The present invention provides a question recommendation method, for improving the accuracy of question recommendation to users. The method includes the following steps:
acquiring questions and acquiring question features corresponding to the questions in a sample collection cycle;
processing the question features, the processed question features being in a preset numerical range; and
determining a to-be-recommended question according to the questions, a second probability of each question among the questions, and a specified recommendation threshold;
where the questions and the second probability of each question among the questions are obtained by using the processed question features and first probabilities; and the first probabilities are obtained based on the question features.

Preferably, the question features include numerical features and textual features, the numerical features are continuous, and the textual features are discontinuous.

Preferably, the step of acquiring questions specifically includes:
acquiring the questions in a feature acquisition cycle;
if there is a question not acquired in the feature acquisition cycle, setting a value of the question not acquired to null; and
if there is no question not acquired in the feature acquisition cycle, using the acquired questions as the questions.

Preferably, the step of acquiring question features corresponding to the questions specifically includes:
acquiring question features in a feature acquisition cycle;
if there is a question feature not acquired in the feature acquisition cycle and the question feature is the numerical feature, using a mean of numerical values of the acquired question features corresponding to the questions as the question feature;
if there is a question feature not acquired in the feature acquisition cycle and the question feature is the textual question feature, using a question feature with a highest frequency of occurrence in the acquired question features corresponding to the questions as the question feature; and
if there is no question feature not acquired in the feature acquisition cycle, using the acquired question features as the question features.

Preferably, the step of processing the question features specifically includes:
performing normalization processing on the question features if the question features are numerical question features; and
performing vectorization processing on the question features if the question features are textual question features, a question feature obtained after the vectorization processing being a numerical question feature.

Preferably, the second probabilities are obtained by performing Deep Neural Network (DNN) calculation on the processed question features and the first probabilities.

Correspondingly, the present application further proposes a question recommendation device, including:
an acquisition module configured to acquire questions and acquire question features corresponding to the questions in a sample collection cycle;
a processing module configured to process the question features, the processed question features being in a preset numerical range; and
a determination module configured to determine a to-be-recommended question according to the questions, a second probability of each question among the questions, and a specified recommendation threshold;
where the questions and the second probability of each question among the questions are obtained by using the processed question features and first probabilities; and the first probabilities are obtained based on the question features.

Preferably, the question features include numerical features and textual features, the numerical features are continuous, and the textual features are discontinuous.

Preferably, the acquisition module is specifically configured to:
acquire the questions in a feature acquisition cycle;
if there is a question not acquired in the feature acquisition cycle, set a value of the question not acquired to null; and
if there is no question not acquired in the feature acquisition cycle, use the acquired questions as the questions.

Preferably, the acquisition module is specifically configured to:
acquire question features in a feature acquisition cycle;
if there is a question feature not acquired in the feature acquisition cycle and the question feature is the numerical feature, use a mean of numerical values of the acquired question features corresponding to the questions as the question feature;
if there is a question feature not acquired in the feature acquisition cycle and the question feature is the textual question feature, use a question feature with a highest frequency of occurrence in the acquired question features corresponding to the questions as the question feature; and
if there is no question feature not acquired in the feature acquisition cycle, use the acquired question features as the question features.

Preferably, the processing module is specifically configured to:
perform normalization processing on the question features if the question features are numerical question features; and
perform vectorization processing on the question features if the question features are textual question features, a question feature obtained after the vectorization processing being a numerical question feature.

Preferably, the second probabilities are obtained by performing DNN calculation on the processed question features and the first probabilities.

As can be seen, by using the technical solution of the present application, question features are processed and subject to classification calculation, and further deep calculation is then performed on obtained results, so that the questions and second probabilities can be output accurately. The present application improves the accuracy of question recommendation to users. The present application can process dense question feature values, and is also applicable to processing large-scale sparse data, thus improving the precision of prediction.

### Brief Description of the Drawings

FIG. 1 is a schematic flowchart of a question recommendation method according to the present application;
FIG. 2 is a schematic diagram of a DNN model according to a specific embodiment of the present application; and
FIG. 3 is a schematic structural diagram of a question recommendation device according to the present application.

### Detailed Description

In view of the problem in the prior art, the present invention proposes a question recommendation method. The method is applied to a question recommendation system, and model training is carried out using a combination of a machine learning model and a DNN model. The system can recommend a user-required question to a user according to historical records, is good at processing sparse and dense question features, and can be used for improving the accuracy of question recommendation to the user.

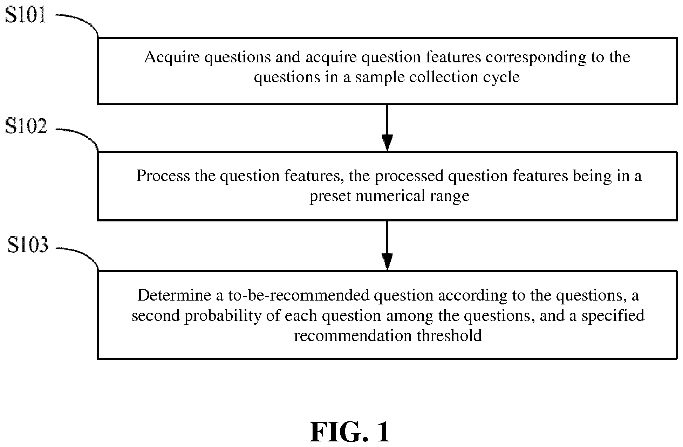

As shown in FIG. 1, FIG. 1 is a schematic flowchart of a verification information processing method according to the present application. The method includes the following steps:
S101: Questions and question features corresponding to the questions are acquired in a sample collection cycle.

The present application is intended to recommend a question to a user who needs a question recommendation service. Users may be the user to whom the question needs to be recommended and other users. Historical records of the users exist in the system of the present invention. The historical records include questions and corresponding question features. The question recommendation system generally includes a collection layer, a processing layer, a storage layer and an output layer. The collection layer is responsible for collecting questions and question features sent by other devices. The processing layer carries out model training by using the collected questions and question features. The storage layer is responsible for data storage, in which the historical records of the users are stored. The output layer outputs questions and question features. The question recommendation system in the present application can be implemented on a server. Preferably, a distributed server is adopted. Moreover, the present application can use one server, or use a cluster consisting of multiple servers.

The question features include numerical features and textual features. The numerical features are continuous. For example, the numerical feature is the number of times that application software is used, and a numerical value 9 represents that the application software is used 9 times. The textual features are discontinuous. For example, the textual feature is an invoice status, which corresponds to a non-invoiced state and an invoiced state. As questions and question features in the historical records are only valid in a particular period of time, a sample collection cycle is set to collect questions and question features in a period of time, for example, in one week or one month. When other devices send questions and question features to the system, it takes a relatively long time to acquire some questions and question features because different devices have different IP addresses. As a result, the system may fail to complete acquisition in a long time.

In order to process data more efficiently, in a preferred embodiment of the present application, a feature acquisition cycle is set, and the questions are acquired in the feature acquisition cycle. If there is a question not acquired in the feature acquisition cycle, a value of the question not acquired is null. If there is no question not acquired in the feature acquisition cycle, the acquired questions are used as the questions. Question features are acquired in the feature acquisition cycle. If there is a question feature not acquired in the feature acquisition cycle and the question feature is the numerical feature, a mean of numerical values of the acquired question features corresponding to the questions is used as the question feature. If there is a question feature not acquired in the feature acquisition cycle and the question feature is the textual question feature, a question feature with a highest frequency of occurrence in the acquired question features corresponding to the questions is used as the question feature. If there is no question feature not acquired in the feature acquisition cycle, the acquired question features are used as the question features.

After acquiring the questions and the question features corresponding to the questions, the recommendation system screens the question features to delete some features, for example, delete identical question features possessed by all the users, question features that easily exceed the feature acquisition cycle, and question features irrelevant to business. Features obtained after the screening can be used to prepare for establishing a classification model subsequently.

S102: The question features are processed, the processed question features being in a preset numerical range.

After acquiring the questions and the corresponding question features, the question recommendation system processes the question features. Normalization processing is performed on the question feature if the question feature is a numerical question feature, so that the processed question feature is in a specified numerical range; vectorization processing is performed on the question feature if the question feature is a textual question feature, so that the processed question feature becomes a numerical question feature and is in the specified question feature.

In a preferred embodiment of the present application, if question features are numerical features, normalization processing can be performed on the question features by using a percentile binning algorithm, so that all the question features are in a specified numerical range after processing. During processing based on the percentile binning algorithm, original numerical values are categorized into 100 bins, and then the bins are coded, for example, 0.01, 0.02 ..., 1.00. The processed numerical question features are in a numerical range of 0 to 1.

Textual question features are presented in the form of texts, and cannot participate in calculation. Therefore, it is necessary to perform vectorization processing on the textual question features to convert the question features from textual features into numerical features. One hot encoding may be employed to process the textual features to calculate a frequency of each feature, thus providing one hot codes based on the frequencies. For example, the textual feature is an invoice status corresponding to a non-invoiced state and an invoiced state. Numerical features 0 and 1 are obtained after vectorization processing, which are in the numerical range of 0 to 1.

After processing, the question features are in the specified numerical range to facilitate participation in the subsequent calculation. It should be noted that, as question features in the specified numerical range need to be obtained in the present application, the foregoing percentile binning algorithm and vectorization processing method are performed, and this is only an example proposed in a preferred embodiment of the present application. The protection scope of the present application is not limited to this example. Based on the foregoing example proposed in the preferred embodiment of the present application, other manners may be selected for calculation, so that the present application is applicable to more application fields, and all these improvements belong to the protection scope of the present invention.

S103: A to-be-recommended question is determined according to the questions, a second probability of each question among the questions, and a specified recommendation threshold.

After the questions and the corresponding question features are obtained, the present application further needs to carry out calculation on the question features based on a simple classification model to obtain first probabilities by using a decision tree algorithm. During calculation based on a decision tree, two rounds of sampling need to be performed first. In the first round, the question features are randomly sampled to obtain question features that can be processed by the decision tree. In the second round, important features are sampled, and weights are calculated according to the question features that can be processed.

Nowadays, original variables and derivative variables of data sets increase as the number of data interfaces grows. Therefore, an Information Value (IV) is critical in the actual data application. The IV is used to represent the amount of "information" that each variable contributes to a target variable, so that feature selection becomes easy and fast.

During feature selection, features are usually selected after the importance of the features is quantified, and how to quantify features becomes the biggest difference among various methods. In an Information Gain (IG), a criterion for measuring the importance is how much information a feature can contribute to a classification system. The more information a feature contributes to the system, the more important the feature is. Therefore, for a feature, a difference between an information amount of the system in the presence of the feature and an information amount of the system in the absence of the feature is the amount of information that the feature contributes to the system, i.e., the IG.

Both the IV and the IG can represent the weight corresponding to the question feature. Therefore, the weight is the IV and/or the IG. Important features are selected according to the weights, and then a classification model is established according to the important features. Then, the question features obtained after screening are analyzed based on the classification model to obtain first probabilities. Corresponding probabilities obtained after the question features are subject to calculation based on the decision tree are used as the first probabilities.

It should be noted that, the foregoing process of obtaining probability values corresponding to the question features based on the decision tree algorithm in the present application is merely an example proposed in a preferred embodiment of the present application. Apart from that, other calculation methods such as logical regression calculation may also be selected, so that the present application is applicable to more application fields, and all these improvements belong to the protection scope of the present invention.

After the processed question features and the first probabilities are obtained, calculation is performed on the processed question features and the first probabilities to obtain the questions and the second probability of each question among the questions. In a preferred embodiment, the questions and the second probability of each question among the questions are obtained by means of DNN calculation. A DNN in the question recommendation system includes an input node and a calculation node. The DNN calculation includes the following steps: (1) The input node acquires the processed question features and the first probabilities. (2) The calculation node performs calculation on the processed question features and the first probabilities by using a fully connected layer, an activation function ReLu and a multi-class loss function softmax loss to obtain the second probabilities.

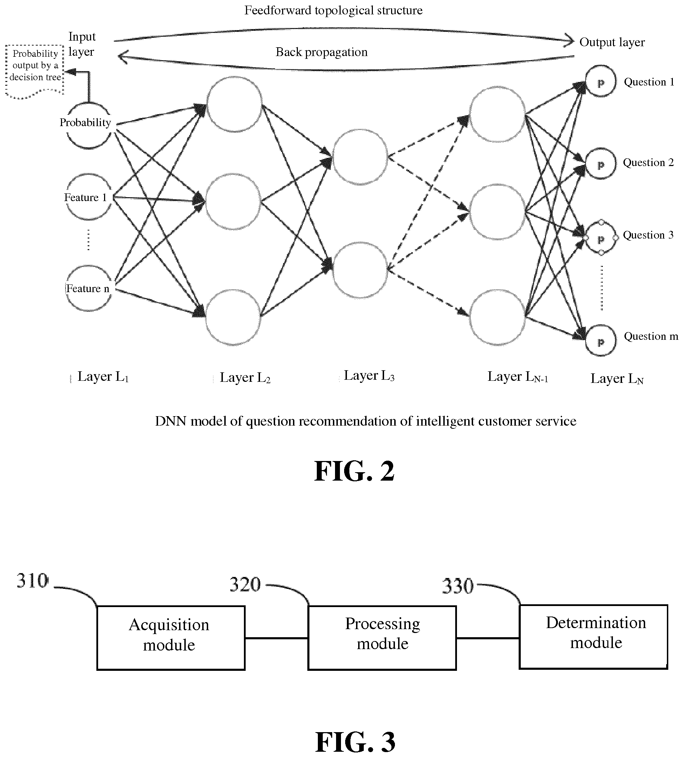

In a specific application scenario, operation steps are as shown in FIG. 2:
a. An input layer acquires the processed question features and the first probabilities.
   Before DNN training, data can be classified preliminarily by using a decision tree. Meanwhile, weights of network nodes in the DNN can be controlled based on the first probabilities.
b. An intermediate layer, i.e., a calculation layer, recommends questions. The calculation layer performs calculation on the processed question features and the first probabilities by using a fully connected layer, an activation function ReLu and a multi-class loss function softmax loss to obtain questions corresponding to the question features and the second probabilities.
   Calculation is carried out based on the activation function ReLu, so that neurons in a part of the network output 0, thus contributing to the sparsity of the network and reducing dependency between parameters, and alleviating the overfitting problem. Meanwhile, the calculation node has a relatively small calculation amount, which helps improve the efficiency of question recommendation of the system. In addition, a GPU can be used in the DNN training to accelerate matrix calculation, thus further improving the calculation speed. In addition to the activation function ReLu, a sigmoid layer can also be used for calculation.
c. An output layer outputs the questions and the second probabilities corresponding to the questions.

It should be noted that, in the present application, the second probabilities are obtained from the first probabilities and the numerical question features that are obtained after processing. The calculation manner proposed in the present application is DNN calculation, but the protection scope of the present application is not limited to the DNN calculation. The above is merely an example proposed in a preferred embodiment. Based on this example, other manners can also be selected for calculation, so that the present application is applicable to more application fields, and all these improvements belong to the protection scope of the present invention.

In a preferred embodiment of the present application, the question recommendation system determines a to-be-recommended question according to the questions, a second probability of each question among the questions, and a specified recommendation threshold. Then, a question feature within the threshold is obtained according to the threshold, and a question corresponding to the question feature is used as the to-be-recommended question. For example, if question features of six questions are obtained within the threshold, the system recommends the six questions. In the present invention, after calculation is performed on questions and question features in historical records corresponding to users and thus to-be-recommended questions are determined, a corresponding result is directly invoked when a user accesses the question recommendation system. By using the question recommendation system in the present application, the user can directly acquire questions that are highly correlated with the user.

In order to achieve the foregoing technical objective, the present application further proposes a question recommendation device. As shown in FIG. 3, the device includes:
an acquisition module 310 configured to acquire questions and acquire question features corresponding to the questions in a sample collection cycle;
a processing module 320 configured to process the question features, the processed question features being in a preset numerical range; and
a determination module 330 configured to determine a to-be-recommended question according to the questions, a second probability of each question among the questions, and a specified recommendation threshold;
where the questions and the second probability of each question among the questions are obtained by using the processed question features and first probabilities; and the first probabilities are obtained based on the question features.

In a preferred embodiment, the question features include numerical features and textual features, the numerical features are continuous, and the textual features are discontinuous.

In a preferred embodiment, the acquisition module is specifically configured to:
acquire the questions in a feature acquisition cycle;
if there is a question not acquired in the feature acquisition cycle, set a value of the question not acquired to null; and
if there is no question not acquired in the feature acquisition cycle, use the acquired questions as the questions.

In a preferred embodiment, the acquisition module is specifically configured to:
acquire question features in a feature acquisition cycle;
if there is a question feature not acquired in the feature acquisition cycle and the question feature is the numerical feature, use a mean of numerical values of the acquired question features corresponding to the questions as the question feature;
if there is a question feature not acquired in the feature acquisition cycle and the question feature is the textual question feature, use a question feature with a highest frequency of occurrence in the acquired question features corresponding to the questions as the question feature; and
if there is no question feature not acquired in the feature acquisition cycle, use the acquired question features as the question features.

In a preferred embodiment, the processing module is specifically configured to:
perform normalization processing on the question features if the question features are numerical question features; and
perform vectorization processing on the question features if the question features are textual question features, a question feature obtained after the vectorization processing being a numerical question feature.

In a preferred embodiment, the second probabilities are obtained by performing DNN calculation on the processed question features and the first probabilities.

According to the description of the foregoing implementations, those skilled in the art can clearly understand that the present application can be implemented by hardware or implemented by software plus a necessary hardware platform. Based on such understanding, the technical solution of the present application can be embodied in the form of a software product. The computer software product can be stored in a non-volatile storage medium (such as a CD-ROM, a USB flash drive, or a mobile hard disk drive), and includes several instructions for instructing a computer device (which can be a personal computer, a server, a network device, or the like) to execute the methods in various implementation scenarios of the present application.

Those skilled in the art can understand that the accompanying drawings are merely schematic diagrams of a preferred implementation scenario. Modules or processes in the accompanying drawings are not necessarily mandatory to the implementation of the present application.

Those skilled in the art can understand that modules in an apparatus in an implementation scenario can be distributed in the apparatus in the implementation scenario according to the description of the implementation scenario, and can also be located in one or more apparatuses different from the apparatus in the current implementation scenario. The modules in the implementation scenario can be combined into one module, and can also be further divided into multiple sub-modules.

The sequence numbers in the present application are merely for the convenience of description, and do not imply the preference among implementation scenarios.

The above disclosed are merely some specific implementation scenarios of the present application. However, the present application is not limited to these implementation scenarios. All variations that can be conceived of by those skilled in the art should fall in the protection scope of the present application.

## Claims

1. A question recommendation method, comprising:
acquiring questions and acquiring question features corresponding to the questions in a sample collection cycle;
processing the question features, the processed question features being in a preset numerical range; and
determining a to-be-recommended question according to the questions, a second probability of each question among the questions, and a specified recommendation threshold;
wherein the questions and the second probability of each question among the questions are obtained by using the processed question features and first probabilities; and the first probabilities are obtained based on the question features.

2. The method according to claim 1, wherein the question features comprise numerical features and textual features, the numerical features are continuous, and the textual features are discontinuous.

3. The method according to claim 1, wherein the step of acquiring questions specifically comprises:
acquiring the questions in a feature acquisition cycle;
if there is a question not acquired in the feature acquisition cycle, setting a value of the question not acquired to null; and
if there is no question not acquired in the feature acquisition cycle, using the acquired questions as the questions.

4. The method according to claim 2, wherein the step of acquiring question features corresponding to the questions specifically comprises:
acquiring question features in a feature acquisition cycle;
if there is a question feature not acquired in the feature acquisition cycle and the question feature is the numerical feature, using a mean of numerical values of the acquired question features corresponding to the questions as the question feature;
if there is a question feature not acquired in the feature acquisition cycle and the question feature is the textual question feature, using a question feature with a highest frequency of occurrence in the acquired question features corresponding to the questions as the question feature; and
if there is no question feature not acquired in the feature acquisition cycle, using the acquired question features as the question features.

5. The method according to claim 2, wherein the step of processing the question features specifically comprises:
performing normalization processing on the question features if the question features are numerical question features; and
performing vectorization processing on the question features if the question features are textual question features, a question feature obtained after the vectorization processing being a numerical question feature.

6. The method according to claim 1, wherein the second probabilities are obtained by performing Deep Neural Network (DNN) calculation on the processed question features and the first probabilities.

7. A question recommendation device, comprising:
an acquisition module configured to acquire questions and acquire question features corresponding to the questions in a sample collection cycle;
a processing module configured to process the question features, the processed question features being in a preset numerical range; and
a determination module configured to determine a to-be-recommended question according to the questions, a second probability of each question among the questions, and a specified recommendation threshold;
wherein the questions and the second probability of each question among the questions are obtained by using the processed question features and first probabilities; and the first probabilities are obtained based on the question features.

8. The question recommendation device according to claim 7, wherein the question features comprise numerical features and textual features, the numerical features are continuous, and the textual features are discontinuous.

9. The question recommendation device according to claim 7, wherein the acquisition module is specifically configured to:
acquire the questions in a feature acquisition cycle;
if there is a question not acquired in the feature acquisition cycle, set a value of the question not acquired to null; and
if there is no question not acquired in the feature acquisition cycle, use the acquired questions as the questions.

10. The question recommendation device according to claim 8, wherein the acquisition module is specifically configured to:
acquire question features in a feature acquisition cycle;
if there is a question feature not acquired in the feature acquisition cycle and the question feature is the numerical feature, use a mean of numerical values of the acquired question features corresponding to the questions as the question feature;
if there is a question feature not acquired in the feature acquisition cycle and the question feature is the textual question feature, use a question feature with a highest frequency of occurrence in the acquired question features corresponding to the questions as the question feature; and
if there is no question feature not acquired in the feature acquisition cycle, use the acquired question features as the question features.

11. The question recommendation device according to claim 8, wherein the processing module is specifically configured to:
perform normalization processing on the question features if the question features are numerical question features; and
perform vectorization processing on the question features if the question features are textual question features, a question feature obtained after the vectorization processing being a numerical question feature.

12. The question recommendation device according to claim 7, wherein the second probabilities are obtained by performing Deep Neural Network (DNN) calculation on the processed question features and the first probabilities.
